# EUROPÄISCHE PATENTSCHRIFT

(11) **EP 3 194 212 B1**
(45) Veröffentlichungstag und Bekanntmachung des Hinweises auf die Patenterteilung: **18.07.2018**
(21) Anmeldenummer: 15747124.4
(22) Anmeldetag: 28.07.2015
(51) Int. Cl.: B60Q 3/00

(54) **VERFAHREN ZUR HERSTELLUNG UND BEARBEITUNG EINES TRANSLUZENTEN BAUTEILS**
METHOD FOR PRODUCING AND PROCESSING A TRANSLUCENT COMPONENT
PROCÉDÉ DE PRODUCTION ET D'USINAGE D'UN ÉLÉMENT TRANSLUCIDE

(30) Priorität: 16.09.2014 DE 102014218531
(43) Veröffentlichungstag der Anmeldung: 26.07.2017
(73) Patentinhaber: Volkswagen Aktiengesellschaft, 38440 Wolfsburg (DE)
(72) Erfinder: KOLLMANN, Christof, 57250 Netphen (DE); FRANKE, Stefan, 38536 Meinersen (DE)
(86) Internationale Anmeldenummer: PCT/EP2015/067208
(87) Internationale Veröffentlichungsnummer: WO 2016/041674

(56) Entgegenhaltungen:
- EP-A1- 2 284 437
- DE-A1-102012 005 397
- DE-A1-102012 108 781
- FR-A1- 2 936 588
- FR-A1- 2 936 590
- US-A- 5 911 492

## Beschreibung

Die Erfindung betrifft ein Verfahren zur Herstellung, Bearbeitung und Montage eines transluzenten Bauteils gemäß dem Oberbegriff des Patentanspruchs 1.

In der Kraftfahrzeugtechnik ist es seit längerem bekannt, transluzente (also Licht durchscheinende) Bauteile innerhalb von solchen Lichtaustrittsöffnungen anzuordnen, die zwischen wenigstens zwei opaken Bauteilen oder in wenigstens einem opaken Bauteil ausgebildet sind. Das oder die opaken Bauteile werden dabei zumeist durch Innenverkleidungsteile, wie beispielsweise Dekorleisten und dergleichen ausgebildet.

So kann beispielsweise durch zwei dicht zueinander beabstandete Dekorleisten eine schlitzartige Lichtaustrittsöffnung gebildet werden, welche durch ein solches transluzentes Bauteil bzw. einen Teil eines solchen ausgefüllt wird. Hinter dem transluzenten Bauteil, also vom Innenraum des Kraftfahrzeugs abgewandt, ist zumeist ein länglicher Lichtleiter vorhanden, in den Licht an seinen beiden stirnseitigen Enden mittels geeigneter Lichtquellen (beispielsweise LEDs) eingekoppelt und quer zu seiner Längserstreckung in Richtung des transluzenten Bauteils wieder auskoppelt wird.

Auf diese Weise gelangt das ausgekoppelte Licht in das transluzente Bauteil und somit aus der schlitzartigen Öffnung in den Innenraum des Kraftfahrzeugs. Dies ist als angenehme Ambientebeleuchtung für Fahrzeuginsassen wahrnehmbar.

Aus der DE 10 2005 011 715 A1 ist ein dünnes, stabförmiges Lichtleiterelement bekannt, welches entlang einer Instrumententafel und einer Mittelkonsole horizontal geführt ist, wodurch eine Ambientebeleuchtung realisiert ist.

Bei der Schaffung einer geeigneten Ambientebeleuchtung ist es wünschenswert, dass das erzeugte Licht definiert bzw. an definierten Stellen in den Innenraum austritt.

Um dies zu realisieren, ist es beispielsweise bekannt, die Oberfläche eines Lichtleiters mit einer dünnen Lackschicht zu versehen. Durch lokal unterschiedliche Stärke der Schichtdicke und/oder durch Strukturierungen können Lichtaustrittsstellen des Lichtleiters oder Stellen mit reduzierter Lichttransmission definiert werden.
Erfolgt ein Lichtaustritt von Licht aus einem transluzenten Bauteil nahe einer im Montagezustand verbleibenden (geradlinigen oder gekrümmten) Fuge, so besteht das besondere Problem, dass ein ungewollter Lichtaustritt in Form von Streulicht auftreten kann. Dies stört das optische Erscheinungsbild der Ambientebeleuchtung und ist daher unerwünscht.
Bislang wird ein solches Streulicht dadurch vermieden, dass zwischen dem transluzenten Bauteil und dem angrenzenden opaken Bauteil der Abstand auf null reduziert wird (Nullfuge), so dass zwischen diesen Bauteilen kein Streulicht mehr austreten kann.
Es ist jedoch der Fall denkbar, dass zwischen dem transluzenten Bauteil und dem angrenzenden opaken Bauteil eine Nullfuge nicht realisierbar und der Verbleib einer Montagefuge (also eines Abstandes zwischen diesen Bauteilen) hinzunehmen oder sogar erwünscht ist.

Die US 5 911 492 A1 offenbart ein Verfahren zur Herstellung, Bearbeitung und Montage eines transluzenten Bauteils gemäß dem Oberbegriff des Anspruchs 1 und beschreibt einen Zeiger eines Anzeigeinstrumentes. Der Zeiger ist aus einem transparenten Material und weist eine Zeigernadel auf, entlang derer sich nach oben eine Rippe erstreckt. Die Zeigernadel ist von einem metallischen Film und dieser wiederum von einer schwarzen Beschichtung überdeckt. Damit die Rippe als Licht auskoppelndes Element wirken kann, wird u.a. vorgeschlagen, nach einem kompletten Beschichten der Zeigernadel die Beschichtung im Bereich der Rippe nachträglich durch mechanische Abtragung zu entfernen.
Der vorliegenden Erfindung liegt die Aufgabe zu Grunde, ein Verfahren zur Herstellung, Bearbeitung und Montage eines transluzenten Bauteils vorzuschlagen, mit dem dazu beigetragen werden kann, dass im Montagezustand des transluzenten Bauteils das Auftreten von unerwünschtem Streulicht vermieden werden kann.
Die vorliegende Aufgabe wird mit den Merkmalen vom Verfahrensanspruch 1 gelöst. Vorteilhafte Weiterbildungen beziehungsweise Ausbildungen des Verfahrens sind den jeweiligen Unteransprüchen entnehmbar.
Es wird ein Verfahren zur Herstellung und Bearbeitung eines transluzenten Bauteils vorgeschlagen. Das transluzente Bauteil soll im Montagezustand wenigstens eine Lichtaustrittsöffnung im Wesentlichen ausfüllen, wobei die wenigstens eine Lichtaustrittsöffnung zwischen wenigstens zwei opaken Bauteilen ausgebildet ist.

Als erfindungsgemäße Merkmale weist das Verfahren zunächst folgende, nacheinander durchzuführende Verfahrensschritte auf:
- Herstellung des transluzenten Bauteils mit wenigstens einem im Querschnitt aufweisenden Basisbereich und wenigstens einem vom Basisbereich abstehenden, zweiten Bereich, wobei der wenigstens eine zweite Bereich in einem Übermaß hergestellt wird.
- Beschichtung des transluzenten Bauteils mit einer opaken (also lichtundurchlässigen) Schicht zumindest im Bereich eines vom Basisbereich abgewandten Endes des wenigstens einen zweiten Bereichs, derart, dass auch das Ende des wenigstens einen zweiten Bereichs von der opaken Schicht bedeckt ist.
- Kürzung des wenigstens einen zweiten Bereichs um den Betrag des Übermaßes

Das transluzente Bauteil, wird vorzugsweise als längliches Kunststoffteil im Spritzgussverfahren hergestellt. Der Basisbereich dient dann zur rückseitigen Befestigung an dem oder den opaken Bauteilen. Von dem Basisbereich können ein oder mehrere zweite Bereiche abstehen.

Wie beschrieben, wird der wenigstens eine zweite Bereich in einem Übermaß (in einer Überlänge) hergestellt. Unter Übermaß soll das Maß verstanden werden, um das der wenigstens eine zweite Bereich zunächst länger hergestellt wird als dessen späteres Endmaß bei der Endmontage.

Durch eine stirnseitige Kürzung des wenigstens einen zweiten Bereichs, welcher auch an seinem Ende mit der opaken Schicht bedeckt ist, wird nun insbesondere ein sauberer Trennbereich erzielt, mit einem freigelegten (um die Überlänge zurückversetzten), stirnseitigen Ende, welches definiert und präzise von der verbleibenden opaken Schicht begrenzt ist.

Hierdurch kann ein definierter Lichtaustritt lediglich aus dem freigelegten Ende des transluzenten Bauteils erzielt werden. Unerwünschtes Streulicht wird somit vermieden. Es ergibt sich also in jedem Fall eine präzise (gerade oder auch gebogene) Lichtlinie, welche auch zu einer gegebenenfalls noch vorhandenen Montagefuge lichttechnisch abgeschottet ist.

Die stirnseitige Kürzung des wenigstens einen zweiten Bereichs erfolgt vorzugsweise durch Wasserstrahlschneiden, Laserschneiden oder auch durch Fräsen.

Durch die Kürzung des beschichteten, transluzenten Bauteils wird insbesondere erreicht, dass nur noch die Kante der Beschichtung vom Fahrzeuginnenraum her sichtbar ist. Bei hinreichend dünner Beschichtung (vorzugsweise im Mikrometerbereich) ist diese Kante auch im Bereich einer gegebenenfalls vorhandenen Montagefuge nicht mehr wahrnehmbar. Das Licht kann wahrnehmbar nur aus dem freigelegten, stirnseitigen Ende des zweiten Bereichs definiert austreten.

Gemäß einer Weiterbildung wird vorgeschlagen, dass das transluzente Bauteil mit einer weißen Lackschicht beschichtet wird. Alternativ kann gemäß einer anderen Weiterbildung das transluzente Bauteil mit einer silberglänzenden Lackschicht beschichtet werden.

Durch eine derartige Beschichtung können ansprechende optische Wirkungen erzielt werden. Insbesondere kann an den in dieser Weise beschichteten Stellen der durch die Absorption im Lack auftretende Lichtverlust reduziert werden. Bei einer Beschichtung mit einer dunklen oder schwarzen Lackschicht kann dieser Vorteil nicht erzielt werden.

Eine andere Weiterbildung des Verfahrens schlägt vor, dass das transluzente Bauteil als längliches Bauteil hergestellt wird, wobei der wenigstens eine zweite Bereich einen Querschnitt mit zwei gegenüberliegenden Montageschrägen aufweist, von denen eine Montageschräge im Wesentlichen vollständig und die andere Montageschräge nur teilweise mit der opaken Schicht beschichtet wird.

Eine solche Verfahrensweise trägt zu einer möglichen Einsparung von Beschichtungsmaterial bei, wobei dennoch die gewünschte Wirkung erzielbar ist.

Gemäß einer anderen Ausbildung des Erfindungsgedankens können die Bauteile derart hergestellt werden, dass im Montagezustand der Bauteile der Lichtaustrittsöffnung eine sich in Richtung der Lichtaustrittsöffnung verjüngende Montageöffnung vorausgeht und auch der wenigstens eine zweite Bereich eine sich in Richtung der Lichtaustrittsöffnung verjüngende Form aufweist.

Dies erleichtert eine gewünschte Montageanordnung der Bauteile.

Schließlich wird gemäß einer Verwirklichung des Erfindungsgedankens auch noch vorgeschlagen, dass zwei opake Bauteile benachbart zueinander angeordnet werden, derart, dass eine schlitzartige Lichtaustrittsöffnung ausgebildet wird. Dabei weisen das eine opakes Bauteil eine Montageschräge mit einem ersten Winkel und das andere opake Bauteil eine Montageschräge mit einem zweiten Winkel auf. Auch der wenigstens eine zweite Bereich des transluzenten Bauteils wird derart hergestellt, dass er zwei gegenüberliegende Montageschrägen mit Winkeln ausbildet. Das transluzente Bauteil wird zunächst derart mit dem einem opaken Bauteil verbunden, dass sich Montageschrägen des wenigstens einen zweiten Bereichs und des einen opaken Bauteils gegenüberliegen, welche unterschiedliche Winkel aufweisen. Anschließend wird das andere opake Bauteil derart an das transluzente Bauteil herangeführt, dass eine Montageschräge des wenigstens einen zweiten Bereichs einer Montageschräge des anderen opaken Bauteils gegenüberliegt, wobei die Montageschrägen in etwa gleiche Winkel aufweisen.

Dies erleichtert auf der einen Seite die Realisierung einer Nullfuge, auf der anderen Seite die Realisierung einer gewünschten Montagefuge.

Bevorzugte Ausführungsbeispiele der Erfindung sind in den Zeichnungen dargestellt und werden in der nachfolgenden Beschreibung näher erläutert. Dabei beziehen sich gleiche Bezugszeichen auf gleiche, vergleichbare oder funktional gleiche Bauteile, wobei entsprechende oder vergleichbare Eigenschaften und Vorteile erreicht werden, auch wenn eine wiederholte Beschreibung weggelassen ist.

Es zeigen, jeweils schematisch
- Fig. 1: eine Darstellung des fertig bearbeiteten, transluzenten Bauteils im Montagezustand zwischen zwei opaken Bauteilen (Dekorleisten),
- Fig. 2: eine Darstellung der zwei Dekorleisten ohne das transluzente Bauteil,
- Fig. 3: eine Darstellung von Herstellungs- bzw. Bearbeitungsschritten des transluzenten Bauteils,
- Fig. 4: eine Darstellung des montierten, transluzenten Bauteils im Kraftfahrzeug,
- Fig. 5: eine Darstellung eines zweiten Ausführungsbeispiels für ein erfindungsgemäß hergestelltes und bearbeitetes, transluzentes Bauteil im Montagezustand an einem opaken Bauteil (Dekorleiste),
- Fig. 6: eine Darstellung des transluzenten Bauteils gemäß Ansicht VI aus Fig. 5 in Alleinstellung und
- Fig. 7: eine Darstellung des montierten, transluzenten Bauteils gemäß Fig. 5 und 6, im Kraftfahrzeug.

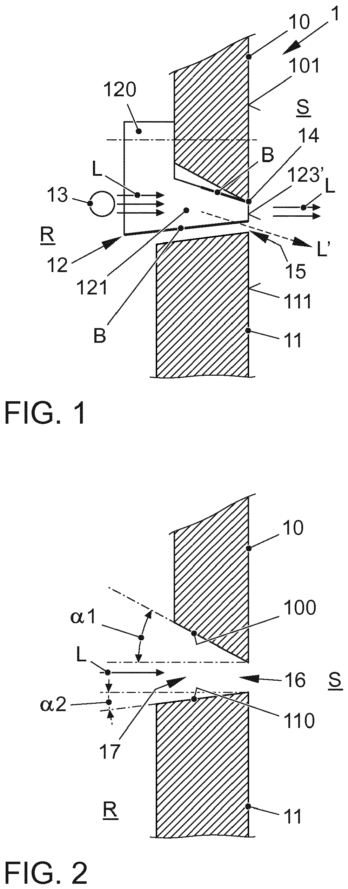

In Fig. 1 ist eine Montageanordnung 1 im Querschnitt ersichtlich, welche aus zwei opaken (lichtundurchlässigen) Bauteilen 10 und 11 sowie einem transluzenten (lichtdurchscheinenden) Bauteil 12 besteht.

Die opaken Bauteile 10 und 11 sind im Innenraum eines Kraftfahrzeugs montierte Dekorleisten, die mit linienartigen Abschlusskanten derart zueinander beabstandet sind, dass eine schlitzartige Lichtaustrittsöffnung 16 (vgl. auch Fig. 2) gebildet wird.

Mit S soll eine fahrzeuginnenraumseitige Sichtseite und mit R eine dem Fahrzeuginnenraum abgewandte Rückseite beziffert werden.

Wie ersichtlich, weist das transluzente Bauteil 12 einen Basisbereich 120 und einen sich vom Basisbereich 120 in etwa rechtwinklig erstreckenden zweiten Bereich 121 auf. Der Basisbereich 120 und der zweite Bereich 121 verleihen dem transluzenten Bauteil 12 in seinem Querschnitt ein stiefelartiges Aussehen.

Nach seiner Herstellung und Bearbeitung wird das transluzente Bauteil 12 zunächst mit dem opaken Bauteil 10 im Bereich seines Basisbereichs 120 verbunden. Dies kann beispielsweise durch eine Verschraubung, eine Verklebung oder auch auf andere Weise erfolgen. Dabei ragt das transluzente Bauteil 12 mit dem zweiten Bereich 121 soweit an eine Oberfläche 101 des opaken Bauteils 10 heran bis ein Ende 123' des zweiten Bereichs 121 in etwa bündig mit der Oberfläche 101 abschließt.

Im Bereich des Endes 123' besteht dann zwischen dem transluzenten Bauteil 12 und dem opaken Bauteil 10 kein Abstand mehr. Es ist eine sogenannte Nullfuge 14 vorhanden.

Im Montagezustand im Kraftfahrzeug ist auf der der Rückseite R zugewandten Seite des transluzenten Bauteils 12 ein länglicher Lichtleiter 13 angeordnet, dessen Länge sich vorzugsweise in etwa über die gesamte Länge des transluzenten Bauteils 12 erstreckt.

In den Lichtleiter 13 werden an zwei Stirnseiten über LEDs (lichtemittierende Dioden, nicht näher dargestellt) Lichtstrahlen L eingekoppelt, welche über geeignete Auskoppelstellen aus dem Lichtleiter 13 quer zu seiner Längserstreckung ausgekoppelt und dann rückseitig in das transluzente Bauteil 12 eingekoppelt werden.

Nach der Befestigung des transluzenten Bauteils 12 am opaken Bauteil 10 wird das opake Bauteil 11 unterseitig so dicht an das transluzente Bauteil 12 herangeführt, dass zwischen dem transluzenten Bauteil 12 und dem opaken Bauteil 11 unterseitig noch ein geringfügiger Abstand in Form einer Montagefuge 15 verbleibt. Die Montagefuge 15 kann beispielsweise in etwa 0,5 mm betragen.

Das Ende 123' ist dabei ebenfalls in etwa bündig zu einer Oberfläche 111 des Bauteils 11 angeordnet.

Es ist erkennbar, dass in der gezeigten Montageposition das transluzente Bauteil 12 mit dem zweiten Bereich 121 in eine durch die Bauteile 10 und 11 gebildete Montageöffnung 17 (vgl. auch Fig. 2) hineinragt und in einer Draufsicht gesehen, also aus Richtung der Sichtseite S, die schlitzartige Lichtaustrittsöffnung 16 im Wesentlichen ausfüllt.

Bedingt durch die Montagefuge 15 kann es normalerweise auftreten, dass in das transluzente Bauteil 12 eingekoppelte Lichtstrahlen L nicht nur kontrolliert aus dem vorderen Ende 123' austreten, sondern auch unerwünschtes Streulicht L' aus der Montagefuge 15 in den Fahrzeuginnenraum gelangen kann.

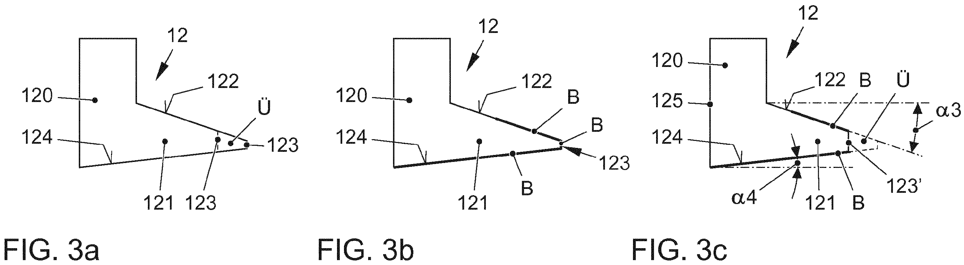

Um dies zu verhindern und einen kontrollierten Lichtaustritt L mit einer präzisen Lichtlinie realisieren zu können, wird das transluzente Bauteil 12 vor seiner Montage entsprechend hergestellt und bearbeitet. Dies soll anhand der Fig. 3a-c nun näher erläutert werden.

Wie bereits erwähnt, ist das Bauteil 12 ein transluzentes Bauteil. Es ist aus einem Kunststoff mit milchigem Erscheinungsbild im Spritzgussverfahren hergestellt und länglich ausgebildet.

Dabei wird der Bereich 121 zunächst mit einem Übermaß bzw. einer Überlänge Ü hergestellt.

Unter Überlänge Ü soll das Maß verstanden werden, um das der Bereich 121 länger ist als das spätere Sollmaß. Das spätere Sollmaß ist also in jedem Fall kürzer als der Bereich 121 mit der Überlänge Ü.

Im Ausführungsbeispiel ist das Sollmaß so gewählt, dass das Ende 123' im Montagezustand des fertig bearbeiteten Bauteils 12 in etwa bündig zu den Oberflächen 101 und 111 steht.

Dies muss nicht so sein. Das spätere Sollmaß kann auch so gewählt werden, dass das Ende 123' etwas aus der Lichtaustrittsöffnung 16 hervortritt oder hinter dieser etwas zurücksteht.

In den Figuren 3a-c ist das Sollmaß (also das Ende 123') gestrichelt dargestellt, während das Rohmaß des hergestellten Bauteils 12 mit dem Ende 123 des zweiten Bereichs 121 beziffert ist.

Nach einer Herstellung des Bauteils 12 mit einem solchen Übermaß Ü wird der Bereich 121 mit einer opaken Beschichtung B versehen (vgl. Fig. 3b).

Die Beschichtung B ist vorzugsweise eine weiße oder auch silberglänzende Beschichtung. Die Beschichtung B kann vorzugsweise auflackiert sein, es sind aber auch andere Herstellungsvarianten wie beispielsweise Sputtern oder dergleichen denkbar.

Wie in der Fig. 3a eingezeichnet, weist der Bereich 121 eine obere Montageschräge 122 und eine untere Montageschräge 124 auf.

Die Beschichtung B wird gemäß Fig. 3b so aufgebracht, dass die Beschichtung B die untere Montageschräge 124 im Wesentlichen vollkommen bedeckt, um das Ende 123 (dieses bedeckend) herumläuft und die obere Montageschräge 122 noch zu etwa ihrer Hälfte bedeckt.

In einem weiteren Schritt wird dann gemäß Fig. 3c der zweite Bereich 121 stirnseitig um den Betrag der Überlänge Ü gekürzt. Dadurch wird das bereits erwähnte Ende 123' freigelegt, welches keine Beschichtung B mehr aufweist. Die Fläche des freigelegten Endes 123' ist im Ausführungsbeispiel dabei in etwa parallel zu einer Rückseite 125 des transluzenten Bauteils 12.

Die stirnseitige Kürzung des zweiten Bereichs 121 erfolgt vorzugsweise durch Wasserstrahlschneiden, Laserschneiden oder auch durch Fräsen.

Durch das freigelegte Ende 123' wird ein eindeutig begrenztes Lichtfenster gebildet, aus dem in das Bauteil 12 eingekoppelte Lichtstrahlen L definiert stirnseitig ausgekoppelt werden können (vgl. Fig. 1).

Wie der Fig. 3c ferner zu entnehmen ist, werden die Montageschräge 122 in einem Winkel α3 und die Montageschräge 124 in einem Winkel α4 hergestellt.

Demgegenüber werden das opake Bauteil 10 und das opake Bauteil 11 mit Montageschrägen 100 bzw. 110 hergestellt, wobei die Montageschräge 100 einen Winkel α1 und die Montageschräge 110 einen Winkel α2 aufweisen (vergleiche Fig. 2).

So kommt es, dass der Bereich 121 im Querschnitt eine konische Form aufweist, welche sich in Montageposition vom Basisbereich 120 in Richtung zur Lichtaustrittsöffnung 16 hin verjüngt.

Auch die durch die Bauteile 10 und 11 in Montageposition gebildete Montageöffnung 17 weist im Querschnitt eine sich von der Rückseite R bis hin zur Sichtseite S verjüngende, konische Form auf.

Dabei ist zu erwähnen, dass im Ausführungsbeispiel der Winkel α1 größer gewählt ist als der Winkel α3 und der Winkel α2 in etwa so groß gewählt ist, wie der Winkel α4.

Hierdurch wird zum einen die Erzeugung der besagten Nullfuge 14 auf der oberen Seite und zum anderen die Erzeugung der definierten Montagefuge 15 auf der unteren Seite begünstigt.

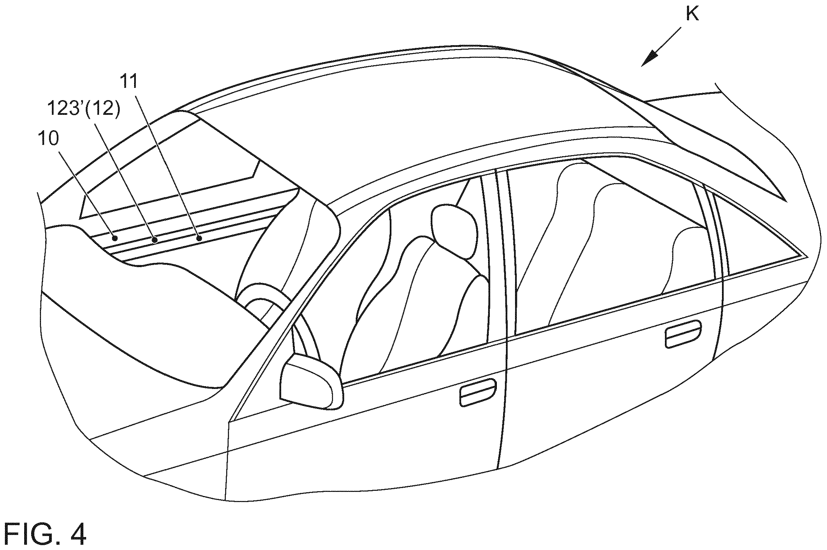

In Fig. 4 sind die Bauteile 10, 11 sowie 12 in Montageposition im Innenraum eines Kraftfahrzeugs K dargestellt.

Dabei sind die opaken Bauteile 10 und 11 als sich in Längsrichtung des Kraftfahrzeugs K erstreckende Dekorleisten ausgebildet, zwischen denen nur das freigelegte Ende 123' des transluzenten Bauteils 12 ersichtlich ist.

Aus diesem so geschaffenen Lichtfenster kann in das Bauteil 12 eingekoppeltes Licht definiert als Ambientebeleuchtung in den Innenraum des Kraftfahrzeugs K hineintreten.

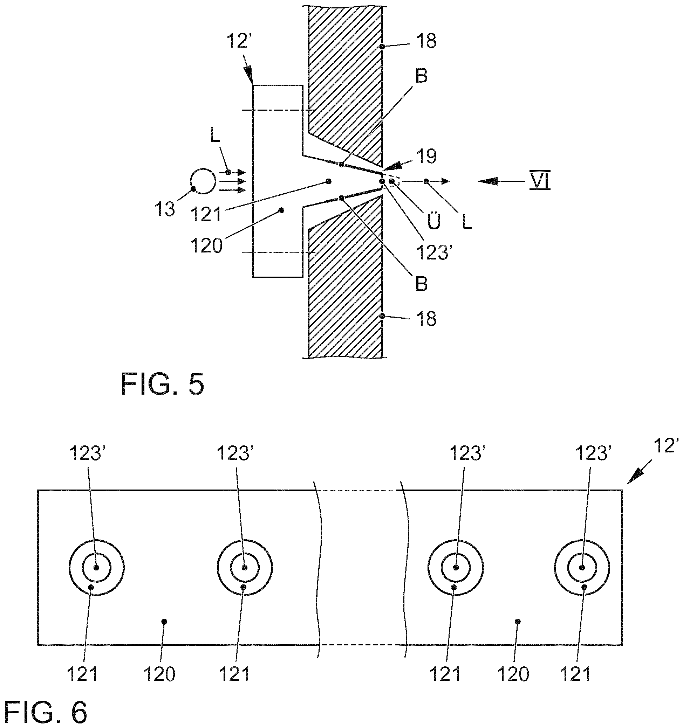

Anhand von Fig. 5 und 6 wird noch eine andere Lösung 12' für ein transluzentes Bauteil kurz beschrieben.

Im Unterschied zur Montageanordnung gemäß Fig. 1 weist das transluzente Bauteil 12' einen etwas anderen Querschnitt auf.

So ist im Querschnitt ein in etwa rechteckiger Basisbereich 120 vorhanden, von dem sich bereichsweise dornenartige, zweite Bereiche 121 senkrecht erstrecken.

In der in Fig. 5 gezeigten Montageposition, bei der das transluzente Bauteil 12' mittels des Basisbereichs 120 an einem opaken Bauteil 18 (Dekorleiste) befestigt ist, ragen die Bereiche 121 soweit in mehrere, voneinander beabstandete Montageöffnungen des Bauteils 18 hinein, bis freigelegte Enden 123' der Bereiche 121 kreisrunde Lichtaustrittsöffnungen 19 im opaken Bauteil 18 im Wesentlichen ausfüllen.

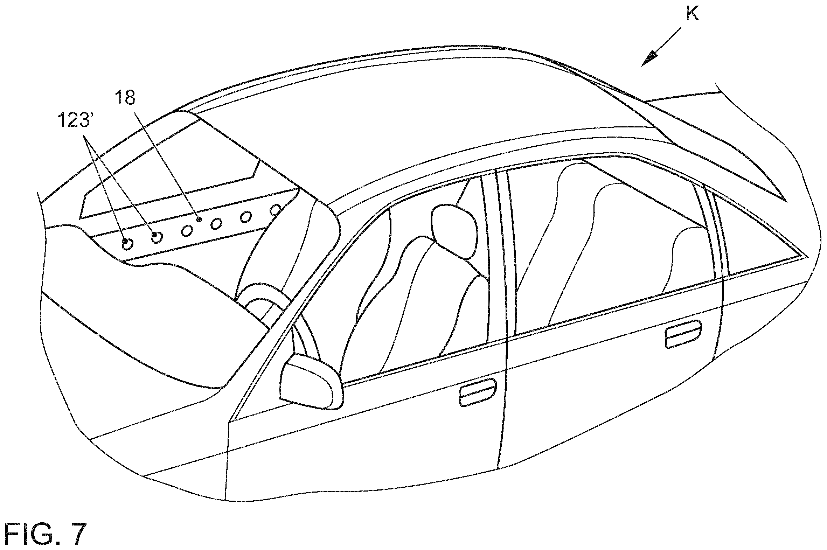

Auch in diesem Ausführungsbeispiel wurden die Bereiche 121 zunächst mit einer opaken Beschichtung B beschichtet, wobei die freigelegten Enden 123' durch stirnseitiges Kürzen um ein zuvor gefertigtes Übermaß Ü erzeugt wurden und keine Beschichtung B mehr aufweisen. Aus einem Lichtleiter 13 in das Bauteil 12' eingekoppeltes Licht L wird somit definiert aus dem freigelegten Ende 123' in den Innenraum eines Kraftfahrzeugs ausgekoppelt.
Wie aus Fig. 7 ersichtlich, wird durch das opake Bauteil 18 eine in Längsrichtung eines Kraftfahrzeugs K im Innenraum verlaufende Dekorleiste gebildet, in dem die freigelegten Enden 123' als punktartige Lichtfenster in Erscheinung treten.

**Bezugszeichenliste**

| | | | |
|---|---|---|---|
| 1 | Montageanordnung | 13 | länglicher Lichtleiter |
| 10 | erstes opakes Bauteil | 14 | Nullfuge |
| 100 | Montageschräge | 15 | Montagefuge |
| 101 | Oberfläche | 16 | schlitzartige Lichtaustrittsöffnung |
| 11 | zweites opakes Bauteil | 17 | Montageöffnung |
| 110 | Montageschräge | 18 | opakes Bauteil |
| 111 | Oberfläche | 19 | kreisrunde Lichtaustrittsöffnung |
| 12 | transluzentes (durchscheinendes) Bauteil | | |
| | | B | opake Beschichtung |
| 120 | Basisbereich | K | Kraftfahrzeug |
| 121 | zweiter Bereich | L | Lichtstrahlen |
| 122 | Montageschräge | L' | Streulicht |
| 123 | Ende des zweiten Bereichs | R | Rückseite |
| 123' | freigelegtes Ende des zweiten Bereichs | S | Sichtseite |
| | | Ü | Übermaß (Überlänge) |
| 124 | Montageschräge | | |
| 125 | Rückseite | α1- α4 | Winkel |

## Patentansprüche

1. Verfahren zur Herstellung, Bearbeitung und Montage eines transluzenten Bauteils (12,12') zwischen wenigstens zwei opaken Bauteilen (10, 11), welches im Montagezustand wenigstens eine Lichtaustrittsöffnung (16) im Wesentlichen ausfüllen soll, wobei die wenigstens eine Lichtaustrittsöffnung (16) zwischen wenigstens zwei opaken Bauteilen (10,11) ausgebildet ist, wobei das Verfahren die folgenden, nacheinander durchzuführenden Verfahrensschritte aufweist:
• Herstellung des transluzenten Bauteils (12) mit wenigstens einem im Querschnitt aufweisenden Basisbereich (120) und wenigstens einem vom Basisbereich (120) abstehenden, zweiten Bereich (121), wobei der wenigstens eine zweite Bereich (121) in einem Übermaß (Ü) hergestellt wird,
• Beschichtung des transluzenten Bauteils (12) mit einer opaken Schicht (B) zumindest im Bereich eines vom Basisbereich (120) abgewandten Endes (123) des wenigstens einen zweiten Bereichs (121), derart, dass auch das Ende (123) des wenigstens einen zweiten Bereichs (121) von der opaken Schicht (B) bedeckt ist,
• Kürzung des wenigstens einen zweiten Bereichs (121) um den Betrag des Übermaßes (Ü),
**dadurch gekennzeichnet, dass** die zwei opaken Bauteile (10,11) benachbart zueinander angeordnet werden, derart, dass eine schlitzartige Lichtaustrittsöffnung (16) ausgebildet wird, wobei das eine opake Bauteil (10) eine Montageschräge (100) mit einem ersten Winkel (α1) und das andere opake Bauteil (11) eine Montageschräge (110) mit einem zweiten Winkel (α2) aufweisen und wobei auch der wenigstens eine zweite Bereich (121) des transluzenten Bauteils (12) derart hergestellt wird, dass er zwei gegenüberliegende Montageschrägen (122,124) mit Winkeln (α3, α4) ausbildet, wobei das transluzente Bauteil (12) zunächst derart mit dem einem opaken Bauteil (10) verbunden wird, dass sich Montageschrägen (100,122) des wenigstens einen zweiten Bereichs (121) und des einen opaken Bauteils (10) gegenüberliegen, welche unterschiedliche Winkel (α1, α3) aufweisen und anschließend das andere opake Bauteil (11) derart an das transluzente Bauteil (12) herangeführt wird, dass eine Montageschräge (124) des wenigstens einen zweiten Bereichs (121) einer Montageschräge (110) des anderen opaken Bauteils (11) gegenüberliegt, wobei die Montageschrägen (110,124) gleiche Winkel (α2, α4) aufweisen.

2. Verfahren nach Anspruch 1, **dadurch gekennzeichnet, dass** das transluzente Bauteil (12) mit einer weißen Lackschicht (B) beschichtet wird.

3. Verfahren nach Anspruch 1, **dadurch gekennzeichnet, dass** das transluzente Bauteil (12) mit einer silberglänzenden Lackschicht (B) beschichtet wird.

4. Verfahren nach einem der vorhergehenden Ansprüche, **dadurch gekennzeichnet, dass** das transluzente Bauteil (12) als längliches Bauteil hergestellt wird, wobei der wenigstens eine zweite Bereich (121) einen Querschnitt mit zwei gegenüberliegenden Montageschrägen (122,124) aufweist, von denen eine Montageschräge (124) im Wesentlichen vollständig und die andere Montageschräge (122) nur teilweise mit der opaken Schicht (B) beschichtet wird.

5. Verfahren nach einem der vorhergehenden Ansprüche, **dadurch gekennzeichnet, dass** die Bauteile (10,11,12) derart hergestellt werden, dass im Montagezustand der Bauteile (10,11,12) der Lichtaustrittsöffnung (16) eine sich in Richtung (L) der Lichtaustrittsöffnung (16,19) verjüngende Montageöffnung (17) vorausgeht und auch der wenigstens eine zweite Bereich (121) eine sich in Richtung (L) der Lichtaustrittsöffnung (16) verjüngende Form aufweist.

## Claims

1. Method for producing, processing and mounting a translucent component (12, 12') between at least two opaque components (10, 11), which in the mounted state is intended to substantially fill at least one light-exit opening (16), wherein the at least one light-exit opening (16) is formed between at least two opaque components (10, 11), wherein the method comprises the following method steps, which are to be carried out one after the other:
• producing the translucent component (12) with at least one base region (120), comprised in the cross section, and at least one second region (121), protruding from the base region (120), wherein the at least one second region (121) is produced with an oversize (U),
• coating the translucent component (12) with an opaque layer (B), at least in the region of an end (123) of the at least one second region (121) that is remote from the base region (120), in such a way that also the end (123) of the at least one second region (121) is covered by the opaque layer (B),
• shortening the at least one second region (121) by the amount of the oversize (Ü),
**characterized in that** the two opaque components (10, 11) are arranged adjacent to one another in such a way that a slit-like light exit opening (16) is formed, wherein the one opaque component (10) has a mounting bevel (100) with a first angle (α1) and the other opaque component (11) has a mounting bevel (110) with a second angle (α2) and wherein also the at least one second region (121) of the translucent component (12) is produced in such a way that it forms two mounting bevels (122, 124) lying opposite one another with angles (α3, α4), wherein the translucent component (12) is first connected to the one opaque component (10) in such a way that mounting bevels (100, 122) of the at least one second region (121) and of the one opaque component (10), which have different angles (α1, α3), lie opposite one another and subsequently the other opaque component (11) is brought up to the translucent component (12) in such a way that a mounting bevel (124) of the at least one second region (121) lies opposite a mounting bevel (110) of the other opaque component (11), wherein the mounting bevels (110, 124) have the same angles (α2, α4).

2. Method according to Claim 1, **characterized in that** the translucent component (12) is coated with a layer of white lacquer (B).

3. Method according to Claim 1, **characterized in that** the translucent component (12) is coated with a layer of shiny silver lacquer (B).

4. Method according to one of the preceding claims, **characterized in that** the translucent component (12) is produced as an elongated component, wherein the at least one second region (121) has a cross section with two mounting bevels (122, 124) lying opposite one another, of which one mounting bevel (124) is coated essentially completely and the other mounting bevel (122) is coated only partially with the opaque layer (B).

5. Method according to one of the preceding claims, **characterized in that** the components (10, 11, 12) are produced in such a way that, in the mounted state of the components (10, 11, 12), the light exit opening (16) is preceded by a mounting opening (17) that tapers in the direction (L) of the light exit opening (16, 19) and also the at least one second region (121) has a form that tapers in the direction (L) of the light exit opening (16).

## Revendications

1. Procédé de fabrication, traitement et montage d'un composant translucide (12, 12') entre au moins deux composants opaques (10, 11), qui, dans l'état de montage, doit sensiblement remplir au moins une ouverture de sortie de lumière (16), l'au moins une ouverture de sortie de lumière (16) étant réalisée entre au moins deux composants opaques (10, 11), le procédé présentant les étapes de procédé suivantes, devant être effectuées l'une après l'autre :
- fabrication du composant translucide (12) avec au moins une région de base (120) présentant en section transversale et au moins une deuxième région (121) faisant saillie depuis la région de base (120), l'au moins une deuxième région (121) étant fabriquée avec un surdimensionnement (Ü),
- revêtement du composant translucide (12) avec une couche opaque (B) au moins dans la région d'une extrémité (123) de l'au moins une deuxième région (121), opposée à la région de base (120), de telle sorte que l'extrémité (123) de l'au moins une deuxième région (121) soit également recouverte par la couche opaque (B),
- raccourcissement de l'au moins une deuxième région (121) de la valeur du surdimensionnement (Ü),
**caractérisé en ce que**
les deux composants opaques (10, 11) sont disposés l'un à côté de l'autre de telle sorte qu'une ouverture de sortie de lumière de type fente (16) soit réalisée, l'un des composants opaques (10) présentant un biseau de montage (100) avec un premier angle (α1) et l'autre composant opaque (11) présentant un biseau de montage (110) avec un deuxième angle (α2), et l'au moins une deuxième région (121) du composant translucide (12) étant également fabriquée de telle sorte qu'elle constitue deux biseaux de montage opposés (122, 124) avec des angles (α3, α4), le composant translucide (12) étant d'abord connecté à l'un des composants opaques (10) de telle sorte que des biseaux de montage (100, 122) de l'au moins une deuxième région (121) et de l'un des composants opaques (10) soient opposés, lesquels présentent des angles différents (α1, α3) et l'autre composant opaque (11) étant ensuite rapproché du composant translucide (12) de telle sorte qu'un biseau de montage (124) de l'au moins une deuxième région (121) soit opposé à un biseau de montage (110) de l'autre composant opaque (11), les biseaux de montage (110, 124) présentant des angles identiques (α2, α4).

2. Procédé selon la revendication 1, **caractérisé en ce que** le composant translucide (12) est revêtu d'une couche de vernis blanc (B).

3. Procédé selon la revendication 1, **caractérisé en ce que** le composant translucide (12) est revêtu d'une couche de vernis couleur argent brillant (B) .

4. Procédé selon l'une quelconque des revendications précédentes, **caractérisé en ce que** le composant translucide (12) est réalisé sous forme de composant allongé, l'au moins une deuxième région (121) présentant une section transversale avec deux biseaux de montage opposés (122, 124) dont un biseau de montage (124) est revêtu essentiellement complètement et l'autre biseau de montage (122) est seulement revêtu en partie avec la couche opaque (B).

5. Procédé selon l'une quelconque des revendications précédentes, **caractérisé en ce que** les composants (10, 11, 12) sont fabriqués de telle sorte que dans l'état de montage des composants (10, 11, 12) de l'ouverture de sortie de lumière (16), une ouverture de montage (17) se rétrécissant dans la direction (L) de l'ouverture de sortie de lumière (16, 19) soit en avant et que l'au moins une deuxième région (121) présente également une forme se rétrécissant dans la direction (L) de l'ouverture de sortie de lumière (16).
